# EUROPÄISCHE PATENTSCHRIFT

(11) **EP 3 491 258 B1**
(45) Veröffentlichungstag und Bekanntmachung des Hinweises auf die Patenterteilung: **18.11.2020**
(21) Anmeldenummer: 17742227.6
(22) Anmeldetag: 19.07.2017
(51) Int. Cl.: F16B 21/08, F16B 5/06, F16B 19/00, F16B 33/00

(54) **BEFESTIGUNGSCLIP**
FASTENING CLIP
CLIP DE FIXATION

(30) Priorität: 10.08.2016 DE 202016104408 U
(43) Veröffentlichungstag der Anmeldung: 05.06.2019
(73) Patentinhaber: Böllhoff Verbindungstechnik GmbH, 33649 Bielefeld (DE)
(72) Erfinder: HEINRICHS, Heinrich, 32602 Vlotho (DE); HESSE, Wolfgang, 33397 Rietberg (DE); GRUSS, Stefan, 32130 Enger (DE)
(74) Vertreter: HWP Intellectual Property
(86) Internationale Anmeldenummer: PCT/EP2017/068219
(87) Internationale Veröffentlichungsnummer: WO 2018/028954

(56) Entgegenhaltungen:
- DE-A1-102006 027 869
- US-A- 2 186 747
- US-A- 3 816 883
- US-A1- 2007 166 127
- US-A1- 2012 261 942
- US-A1- 2015 023 759

## Beschreibung

### 1. Gebiet der Erfindung

Die vorliegende Erfindung betrifft einen Befestigungsclip zum Befestigen von einem ersten und einem zweiten Bauteil, eine Verbindung von einem ersten und einem zweiten Bauteil mithilfe dieses Befestigungsclips sowie ein Herstellungsverfahren für den oben genannten Befestigungsclip.

### 2. Hintergrund der Erfindung

Im Stand der Technik ist eine Vielzahl unterschiedlicher Konstruktionen von Befestigungsclips bekannt. Neben dem Verbinden von mehreren Bauteilen erfüllen diese Befestigungsclips häufig noch zusätzliche Funktionen. Zu diesen Funktionen zählt ein Dämpfen der Verbindung zwischen zwei Bauteilen, ein Anzeigen des hergestellten Verbindungszustands oder ein Absichern der Verbindung gegen ein ungewolltes Lösen.

Beispielsweise offenbart DE 20 2008 009 210 U1 einen Befestigungsclip in Form einer Verbindungsbaugruppe. Diese Verbindungsbaugruppe besteht aus mindestens drei Elementen, die notwendigerweise zum Herstellen einer Verbindung ineinander montiert werden müssen. Neben dem Herstellungsaufwand sind derartige Befestigungsclips zeitintensiv bei der Installation, was zu nachteilig hohen Taktzeiten, beispielsweise in der Automobilbranche, führt.

DE 11 2013 000 334 T5 beschreibt eine Airbag-Verankerungsclip-Anordnung. Diese Verankerungsclip-Anordnung ist ausgelegt, um sich sicher an einer Struktur zu verankern. Dabei ist entscheidend, dass die Anordnung mindestens ein Verifikationselement aufweist, das eine Bestätigung liefern soll, wenn die Vielzahl der Verankerungselemente sicher an einer Struktur verankert ist. Derartige Befestigungsanordnungen haben gerade bei sicherheitsrelevanten Befestigungen ihre Berechtigung. Geht es jedoch um eine robuste Befestigung von mindestens zwei Teilen aneinander, die mit geringem Zeitaufwand realisierbar sein sollte, dann stellen die hier verwendeten Verifikationselemente einen übermäßigen Aufwand dar.

FR 2 993 328 beschreibt einen Befestigungsclip bestehend aus einer länglichen Struktur mit zwei Befestigungsenden. Diese Befestigungsenden stellen jeweils eine Verbindung zu einem Bauteil her. Zwischen den Befestigungsenden befindet sich eine längenvariable federnde Anordnung, mit deren Hilfe Toleranzen zwischen den beiden miteinander verbundenen Bauteilen ausgleichbar oder auftretende Schwingungen dämpfbar sind.

Befestigungsclips umfassen häufig eine Verraststruktur oder eine federnde Klemmhalterung. Ein Beispiel für eine federnde Klemmhalterung ist in EP 2 689 146 B1 offenbart. Diese federnde Klemmhalterung wird durch zwei sich kreuzende Biegeschenkel gebildet. Diese Biegeschenkel sind derart konfiguriert, dass der eine Biegeschenkel in eine elliptische Öffnung des anderen Biegeschenkels eingreift und in dieser versetzbar angeordnet ist. Somit liegt zwar eine scherenähnliche Anordnung vor, die aber nicht zwei Schenkel über einen festen Drehpunkt sondern über eine versetzbare Gleitverbindung miteinander koppelt. Bei dieser Anordnung ist von Nachteil, dass miteinander zu verbindende Bauteile nur aus einer Richtung auf den Befestigungsclip aufgeschoben und daran verrastet werden können. Dies hat Montagezwänge zur Folge, die ebenfalls das Einsatzgebiet des Befestigungsclips einschränken.

Eine weitere Gruppe von Befestigungsclips ist in WO 2010/051987 A1, WO 2013/179110 A1, US 8,883,059 B2 und WO 2014/099444 A1 beschrieben. Diese Art von Befestigungsclip besteht aus einer länglichen Struktur mit zwei einander gegenüberliegend angeordneten Befestigungsenden. Während das eine Befestigungsende durch sich an einer Bauteilöffnung verrastende pfeilähnliche Rastarme gebildet wird, stellt das gegenüberliegende Befestigungsende eine Art Kopf des Befestigungsclips dar. Dieser Kopf hat beispielsweise die Form eines tellerartigen Flansches, der auf einem mittigen Axialsteg des Befestigungsclips angeordnet ist. Ein beispielsweise einseitig offenes Langloch eines Bauteils, beispielsweise eine Klause, ist auf diese Weise auf den Axialsteg aufschiebbar und wird durch den tellerartigen Flansch in dieser Position gehalten. Dabei bildet dieses Befestigungsende lediglich eine formschlüssige Verbindung mit dem daran angeordneten Bauteil. Unterschiedliche Ausgestaltungen des Befestigungsclips sehen eine tellerartige Stützstruktur zwischen den beiden gegenüberliegend angeordneten Befestigungsenden vor. Während die Verraststruktur ein Bauteil gegen eine mögliche Dichtung an der tellerartigen Stützstruktur abstützt, bildet die Stützstruktur im Hinblick auf den tellerartigen Flansch lediglich einen Teil der formschlüssigen Verbindung ohne Kraftwirkung.

Der zuletzt beschriebene Befestigungsclip hat beispielsweise den Nachteil, dass hier eine formschlüssige einerseits und eine kraftschlüssige Verbindung andererseits miteinander kombiniert werden. Diese haben nicht in allen Anwendungsfällen eine ausreichende Befestigungsqualität, um eine passende Lebensdauer der hergestellten Verbindung zu erzielen.

Ein Befestigungselement mit W-Basis ist in US 2007/166127 A1 beschrieben. Das Befestigungselement umfasst mehrere Beine, die sich während der Installation durch eine Öffnung einer Struktur in Richtung eines gemeinsamen Elements zusammendrücken, an dem die Beine befestigt sind. Diese Beine greifen dann in die Rückseite der Struktur ein, an der das Befestigungselement montiert ist, um das Befestigungselement in einer montierten Position innerhalb der Öffnung zu halten. Das Befestigungselement enthält auch einen Kopf oder eine ähnliche Struktur, mit der Gegenstände am Befestigungselement montiert werden können. Das Befestigungselement enthält auch entgegengesetzte flexible Armmerkmale zur Wärmeausdehnung zum Zusammenbauen von Formteilen an einer Platte.

Ein Befestigungselement für eine Innenverkleidung ist in US 2012/261942 A1 beschrieben. Das Befestigungselement umfasst einen ersten Befestigungsabschnitt mit einem Pfosten und ersten und zweiten Auslenkflügeln, die mit einem Ende des Pfostens verbunden sind, wobei jeder ein Flügelverlängerungselement aufweist, wobei der erste und der zweite Ablenkflügel elastisch zum Pfosten hin auslenkbar sind. Ein zweiter Befestigungsabschnitt, der mit dem ersten Befestigungsabschnitt verbunden ist, umfasst ein erstes elastisches Dichtungselement. Ein zweites elastisches Dichtungselement ist einstückig mit einer Dichtungsoberfläche des ersten elastischen Dichtungselements verbunden. Das zweite elastische Dichtungselement umfasst erste und zweite Flügelgehäuseabschnitte, die mit den Flügelverlängerungselementen des ersten und zweiten Auslenkflügels verbunden sind. Erste und zweite Durchgangsbohrungen sind entgegengesetzt um den Pfosten positioniert. Die erste und die zweite Durchgangsbohrung fallen vorübergehend zusammen, wenn Teile des ersten und zweiten Flügelgehäuseabschnitts aufgenommen werden, wenn der erste und der zweite Auslenkflügel elastisch zum Pfosten hin ausgelenkt werden.

Es ist daher die Aufgabe vorliegender Erfindung, eine Alternative zu bekannten Befestigungsclips bereitzustellen, die zumindest zwei Bauteile verlässlich miteinander verbindet.

### 3. Zusammenfassung der Erfindung

Die obige Aufgabe wird durch einen Befestigungsclip gemäß dem Patentanspruch 1, durch eine Verbindung zwischen einem ersten und einem zweiten Bauteil mithilfe des Befestigungsclips gemäß dem unabhängigen Patentanspruch 7, durch ein Herstellungsverfahren für den oben genannten Befestigungsclip gemäß dem unabhängigen Patentanspruch 8 oder 10 sowie durch ein Verbindungsverfahren gemäß dem unabhängigen Patentanspruch 11 gelöst. Vorteilhafte Ausgestaltungen und Weiterentwicklungen vorliegender Erfindung gehen aus der folgenden Beschreibung, den begleitenden Zeichnungen sowie den anhängenden Patentansprüchen hervor.

Der erfindungsgemäße Befestigungsclip dient der Befestigung von einem ersten Bauteil an einem zweiten Bauteil. Der Befestigungsclip besteht aus einer integralen länglichen Struktur mit einem ersten und einem zweiten Befestigungsende, in der das erste Befestigungsende eine zumindest einarmige selbsttätige Verraststruktur und das zweite Befestigungsende eine federnde Klemmhalterung bildet, die jeweils gegen eine zwischengeordnete Stützstruktur wirken. Der bevorzugte Befestigungsclip vorliegender Erfindung kombiniert in einer einstückig aus Kunststoff hergestellten Struktur zwei einander gegenüberliegend angeordnete Befestigungsenden. Diese Befestigungsenden realisieren jeweils eine kombinierte kraftschlüssige und formschlüssige Verbindung mit einem daran angeordneten Bauteil. Während der Formschluss im Wesentlichen durch die Verraststruktur am ersten Befestigungsende und die federnde Klemmhalterung am zweiten Befestigungsende jeweils in Kombination mit einem zentralen länglichen Axialsteg realisiert wird, erfolgt ein Kraftschluss durch die Wirkung der beiden Befestigungsstrukturen gegen die zwischengeordnete Stützstruktur. Da die federnde Klemmhalterung bevorzugt das benachbart angeordnete Bauteil gegen die Stützstruktur drückt, sorgt es für eine zusätzliche Sicherung und den Bestand der formschlüssigen Verbindung. In gleicher Weise realisiert mindestens ein federnder Raststeg der Verraststruktur eine Kraftwirkung der Verraststruktur auf das benachbart angeordnete Bauteil in Richtung der mittig angeordneten Stützstruktur. Auch auf diese Weise wird der vorliegende Formschluss bevorzugt unterstützt und der Bestand der hergestellten Verbindung durch den Kraftschuss abgesichert. Zu diesem Zweck kann die Stützstruktur beliebig geformt sein, solange sie im Abstützbereich des ersten und zweiten Bauteils ausreichende Anlagefläche oder Anlagestrukturen bereitstellt.

Gemäß einer bevorzugten Ausgestaltung des erfindungsgemäßen Befestigungsclips umfasst die Klemmhalterung zumindest eine in sich geschlossene Federschleife, die eine Fläche vorzugsweise parallel zu einer Längsachse des Befestigungsclips einschließt.

Im Gegensatz zum Stand der Technik werden keine Federarme als Klemmhalterung eingesetzt. Vielmehr wird eine geschlossene Struktur, hier ein umlaufender und in sich geschlossener Kunststoffstreifen, verwendet, um eine Federspannung aus der Formstabilität dieser Struktur auf ein zu befestigendes Bauteil abzuleiten. Dabei wirkt bevorzugt die Formgebung der Federschleife mit den Materialeigenschaften des verwendeten Kunststoffs zusammen. Es ist das grundsätzliche Ziel, die Fcderschleife nur zerstörungsfrei zu verformen, sodass hier die elastischen Materialeigenschaften mit der Formstabilität der Federschleife kombiniert werden. Dabei nutzt man das Bestreben der Federschleife, nach erfolgter Verformung in die ursprüngliche Form zurückzukehren. Da die Federschleife bevorzugt kreisförmig, oval, elliptisch und ähnlich innerhalb einer Ebene verläuft, schließt sie gleichzeitig eine Fläche ein. Gemäß einer bevorzugten Ausführungsform vorliegender Erfindung ist diese Ebene parallel zur Längsachse des Befestigungsclips angeordnet. Mit anderen Worten liegt der zentral angeordnete Axialsteg des Befestigungsclips bevorzugt innerhalb der Ebene, die durch die mindestens eine Federschleife aufgespannt wird. Es ist ebenfalls bevorzugt, die eingeschlossene Fläche nicht parallel, also winklig, zur Längsachse des Befestigungsclips anzuordnen, solange dadurch die für eine kraftschlüssige Verbindung erforderlichen Druckkräfte durch die Federschleife bereitstellbar sind.

Erfindungsgemäß bevorzugt weist das Innere der mindestens einen Federschleife einen Begrenzungssteg auf, der bevorzugt parallel zur Längsachse des Befestigungsclips verläuft und mit dem eine Kompression der Federschleife auf ein Maximum begrenzt ist.

Dieser Begrenzungssteg ist bevorzugt auf die Materialeigenschaften des zur Herstellung der Federschleife verwendeten Kunststoffmaterials abgestimmt. Der Begrenzungssteg verhindert im Speziellen, dass die Materialbelastung der Federschleife während der Kompression der Federschleife nicht über einen elastischen Verformungsbereich hinausgeht. Auf diese Weise wird die im Befestigungsclip eingesetzte Federschleife nicht beschädigt und dadurch der Befestigungsclip ebenfalls nicht geschwächt. Daher wird vorzugsweise der Begrenzungssteg parallel zur Kompressions- und oder Verformungsrichtung der Federschleife, d.h. für gewöhnlich vorzugsweise parallel zur Längsachse des Befestigungsstegs, angeordnet. In Abhängigkeit von dem zur Herstellung der Federschleife verwendeten Materials wird die Länge des Begrenzungsstegs unterschiedlich ausgebildet.

Der erfindungsgemäße Befestigungsclip umfasst am zweiten Befestigungsende einen Quersteg, an dem zumindest zwei Federschleifen einander gegenüberliegend angeordnet sind. In diesem Zusammenhang ist es ebenfalls denkbar, mehr als zwei Federschleifen am genannten Quersteg anzuordnen. Gemäß einer weiteren bevorzugten Ausführungsform ist es ebenfalls denkbar, mehr als einen Quersteg anzuordnen, der dann eine, zwei oder eine andere Anzahl an Federschleifen trägt. Weiterhin bevorzugt werden die eine oder mehrere Federschleifen über eine winklige Anordnung oder eine nicht stegartige Konstruktion an dem zweiten Befestigungsende angebunden.

Gemäß einer weiteren bevorzugten Ausführungsform des erfindungsgemäßen Befestigungsclips ist die Stützstruktur tellerartig oder zumindest einseitig, vorzugsweise beidseitig, flächig ausgebildet und weist zumindest einseitig eine Dichtstruktur auf. Diese Dichtstruktur kann unterschiedliche Ausgestaltungen ausweisen, die vorzugsweise mittels Spritzguss hergestellt sind. Gemäß einer anderen Ausführungsform vorliegender Erfindung wird die Dichtstruktur im Nachhinein an dem integral gefertigten Befestigungsclip, im Speziellen an der Stützstruktur, befestigt. Gemäß einer weiteren Alternative vorliegender Erfindung wird der Befestigungsclip im 2K-Spritzgussverfahren hergestellt. Dabei wird nach Fertigung des integralen Befestigungsclips mit Stützstruktur die Dichtstruktur an die Stützstruktur angespritzt. Um hier die gewünschten und bevorzugten Dichteigenschaften zu erzielen, besteht die Dichtstruktur aus einem anderen Kunststoff als die integrale Struktur des Befestigungsclips.

Weiterhin bevorzugt umfasst die Verraststruktur am ersten Ende des Befestigungsclips zumindest einen spitzwinklig zur Längsachse des Befestigungsclips angeordneten Raststeg, der eine Einführschräge und an einem freien Ende einen Hinterschnitt, vorzugsweise einen axialen Hinterschnitt, in Bezug auf eine Löserichtung der Verraststruktur umfasst. Die spitzwinklige Anordnung der Verraststruktur entsteht dadurch, dass der mindestens eine Raststeg in Richtung der Stützstruktur geneigt angeordnet ist. Auf diese Weise werden das Einstecken und Verrasten der Verraststruktur in einer Bauteilöffnung unterstützt, da der bzw. die Raststege selbst eine Einführhilfe mithilfe der Schräge bereitstellen. Um ein einfaches Lösen der Verraststruktur aus eine Bauteilöffnung zu vermeiden, ist das freie Ende des federnd angeordneten Raststegs flächig oder abgestuft oder formangepasst an die Bauteilöffnung ausgebildet. Dies gewährleistet, dass die Verraststruktur zumindest soweit in eine Bauteilöffnung einsteckbar ist, dass der mindestens eine Raststeg am Ende des Einsetzvorgangs der Verraststruktur in die Bauteilöffnung radial auswärts schnappt, vorzugsweise vollständig oder teilweise, um ein Bewegen des Bauteils in Löserichtung von der Verraststruktur zu verhindern.

Gemäß einer weiteren bevorzugten Ausführungsform des erfindungsgemäßen Befestigungsclips ist die Verraststruktur derart ausgebildet, dass das daran befestigte Bauteil gegen die Dichtstruktur an der Stützstruktur verrastet wird, d.h. durch das Verrasten gegen diese Dichtstruktur gedrückt wird.

Vorliegende Erfindung umfasst ebenfalls ein erstes und ein zweites Bauteil, die über den oben beschriebenen Befestigungsclip gemäß einer seiner bevorzugten Ausführungsformen miteinander verbunden sind.

Weiterhin umfasst vorliegende Erfindung ein Herstellungsverfahren für den Befestigungsclip, das die folgenden Schritte aufweist: Bereitstellen einer Spritzgussform, die eine einteilige Struktur für den Befestigungsclip vorgibt, wobei der Befestigungsclip aus einer integralen länglichen Struktur mit einem ersten und einem zweiten Befestigungsende besteht, in der das erste Befestigungsende eine zumindest einarmige selbsttätige Verraststruktur und das zweite Befestigungsende eine federnde Klemmhalterung bildet, die jeweils gegen eine zwischengeordnete Stützstruktur wirken, und Spritzgießen des Befestigungsclips aus nur einem Kunststoff. Weiterhin bevorzugt wird im Rahmen des Herstellungsverfahrens eine Dichtstruktur an der Stützstruktur befestigt, die vorzugweise über ein separates Spritzgussverfahren oder ein anderes geeignetes Verfahren hergestellt worden ist. Alternativ dazu ist es ebenfalls bevorzugt, im Rahmen eines 2K-Spritzgussverfahrens die Dichtstruktur spritzzugießen, sodass die Dichtstruktur an der Stützstruktur befestigt ist.

Zudem umfasst vorliegende Erfindung ein weiteres Herstellungsverfahren für den Befestigungsclip, das die folgenden Schritte aufweist: Bereitstellen eines Datenmodells, das eine einteilige Struktur für den Befestigungsclip vorgibt, wobei der Befestigungsclip aus einer integralen länglichen Struktur mit einem ersten und einem zweiten Befestigungsende besteht, in der das erste Befestigungsende eine zumindest einarmige selbsttätige Verraststruktur und das zweite Befestigungsende eine federnde Klemmhalterung bildet, die jeweils gegen eine zwischengeordnete Stützstruktur wirken, und Erzeugen des Befestigungsclips auf Grundlage des Datenmodells aus nur einem Kunststoff mit einem additiven Verfahren, insbesondere 3D Druck.

### 4. Kurze Beschreibung der begleitenden Zeichnungen

Die vorliegende Erfindung wird unter Bezugnahme auf die begleitenden Zeichnungen näher erläutert. Es zeigen:
- Figur 1: eine perspektivische Darstellung der Verbindung eines ersten und eines zweiten Bauteils mithilfe einer bevorzugten Ausführungsform des erfindungsgemäßen Befestigungsclips,
- Figur 2: eine perspektivische Darstellung des Befestigungsclips aus Fig. 1,
- Figur 3: eine perspektivische Darstellung des Befestigungsclips aus Fig. 1,
- Figur 4: eine Ansicht von unten des Befestigungsclips aus Fig. 1,
- Figur 5: eine seitliche teilweise Schnittansicht des Befestigungsclips aus Fig. 1,
- Figur 6: eine Ansicht von oben des Befestigungsclips aus Fig. 1,
- Figur 7: eine Seitenansicht des Befestigungsclips aus Fig. 1,
- Figur 8: eine bevorzugte Ausführungsform einer Öffnung im Bauteil zum Einsetzen und dortigen Verrasten des Befestigungsclips aus Fig. 1,

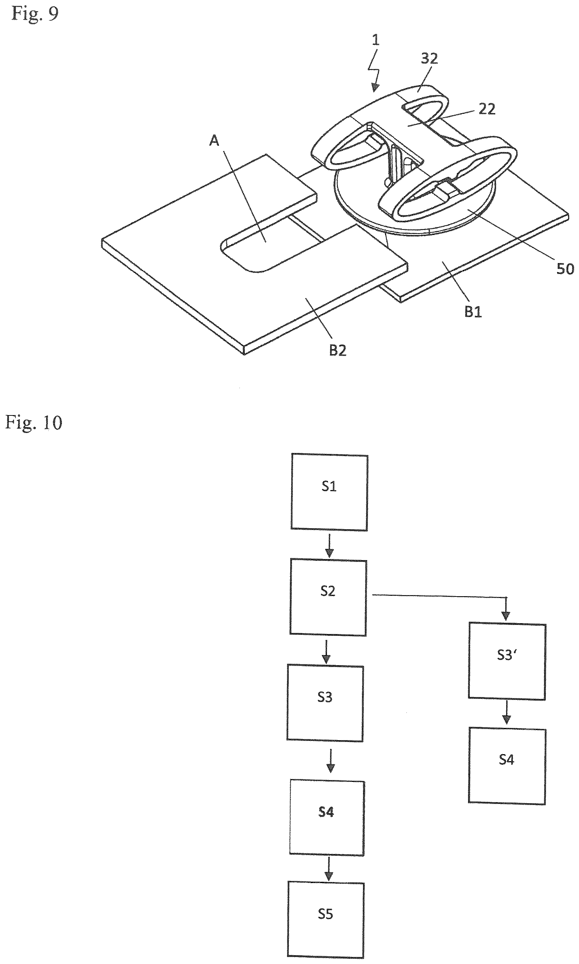

- Figur 9: eine perspektivische Darstellung eines bevorzugten Zwischenschritts zur Herstellung einer Verbindung von zwei Bauteilen mithilfe des erfindungsgemäß bevorzugten Befestigungsclips und
- Figur 10: ein Flussdiagramm einer bevorzugten Ausführungsform des Herstellungsverfahrens des Befestigungsclips gemäß Fig. 1.

### 5. Detaillierte Beschreibung der bevorzugten Ausführungsformen

Der erfindungsgemäß bevorzugte Befestigungsclip 1 stellt eine Verbindung zwischen einem ersten Bauteil B1 und einem zweiten Bauteil B2 her. Diese Bauteile B1, B2 werden bevorzugt jeweils mithilfe einer kombinierten kraft- und formschlüssigen Verbindung an den Befestigungsclip 1 gekoppelt. Diese Verbindung ist durch das erste Befestigungsende 10 und durch das zweite Befestigungsende 30 vorgegeben. Diese sind integral mit einem zentralen Axialsteg 20 ausgebildet, sodass der Befestigungsclip 1 eine längliche Konstruktion darstellt.

Das erste Befestigungsende 10 besteht bevorzugt aus mindestens einem Raststeg 12, der eine Verraststruktur bildet. Der mindestens eine Raststeg 12, in vorliegender bevorzugter Ausführungsform zwei Raststege 12, ist bevorzugt mit einem Ende mit dem Axialsteg 20 verbunden. Um ein Einstecken und Einrasten in einer Bauteilöffnung O zu erleichtern, sind die bevorzugten Raststege 12 in einem spitzen Winkel zum Axialsteg 20 angeordnet. Aufgrund dieser Anordnung stellen die Raststege 12 auch eine Einführschräge 14 bereit. Während des Einsetzens der Raststruktur 10 in der Bauteilöffnung O gleitet der Rand der Bauteilöffnung O an der Einführschräge 14 ab und drückt dabei den Raststeg 12 in Richtung des Axialstegs 20.

Sobald das erste Bauteil eine Rastkante 16 am Raststeg 12 überwunden hat, schnappt der Raststeg 12 nach außen, also entfernt sich vom Axialsteg 20. Dadurch wird das erste Bauteil B1 über eine bevorzugte Druckkante 18 in Richtung einer zwischen dem ersten 10 und dem zweiten Befestigungsende 30 angeordneten Stützstruktur 50 gedrückt.

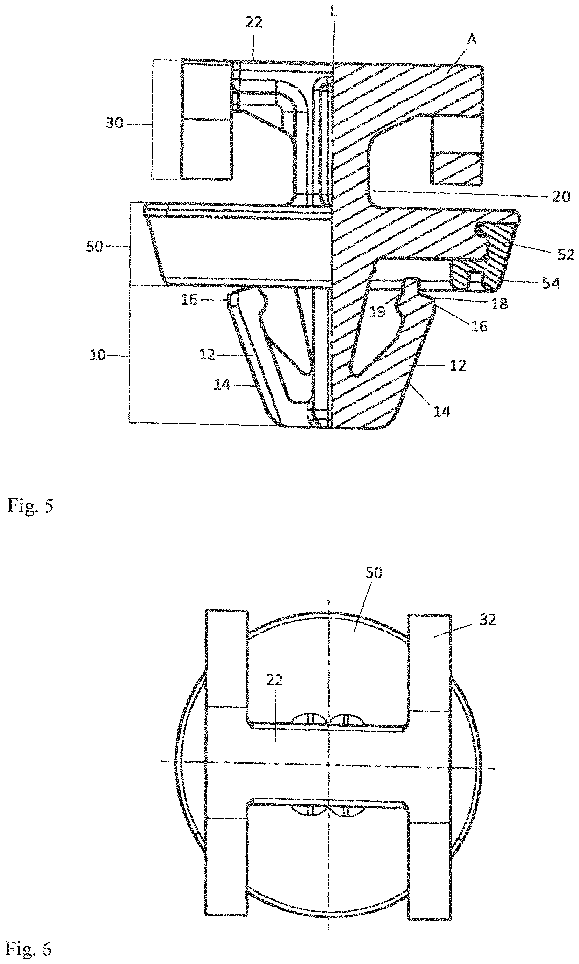

Wie man anhand von Fig. 5 erkennen kann, ist die Druckkante 18 bevorzugt in einem stumpfen Winkel zur Längsachse L des Befestigungsclips 1 angeordnet. Stützt sich somit der innere Rand der Bauteilöffnung O des ersten Bauteils B1 an der Druckkante 18 ab, während der Raststeg 12 nach außen in seine Ausgangsposition zurückfedert, dann wird das erste Bauteil B1 in Richtung der Stützstruktur 50 gedrückt. Sollte die Druckkante 18 bevorzugt quer oder in einem spitzen Winkel zur Längsachse L angeordnet sein, dann bildet die Druckkante 18 lediglich einen Hinterschnitt, wie auch bei einer stumpfwinkligen Anordnung. Dieser Hinterschnitt wirkt einer möglichen Auszugskraft in Auszugsrichtung des Befestigungsclips 1 aus der Bauteilöffnung O entgegen, also entgegengesetzt zur Einsetzrichtung in die Bauteilöffnung O. Nur wenn die Raststege 12 manuell oder automatisch in Richtung Axialsteg 20 bewegt werden, ist die selbsttätige Verraststruktur 10 aus der Öffnung O des ersten Bauteils B1 lösbar.

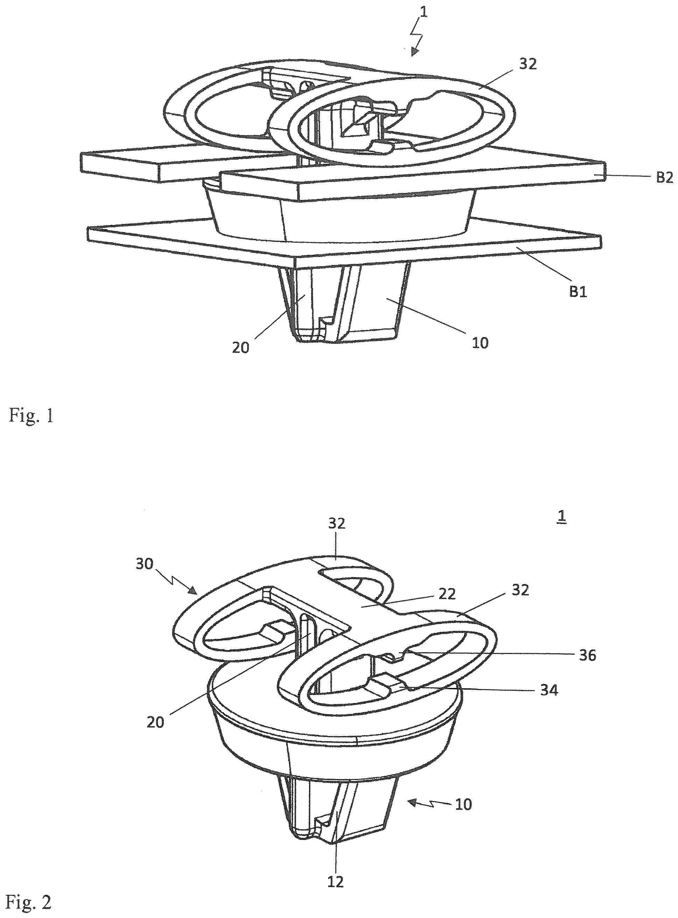

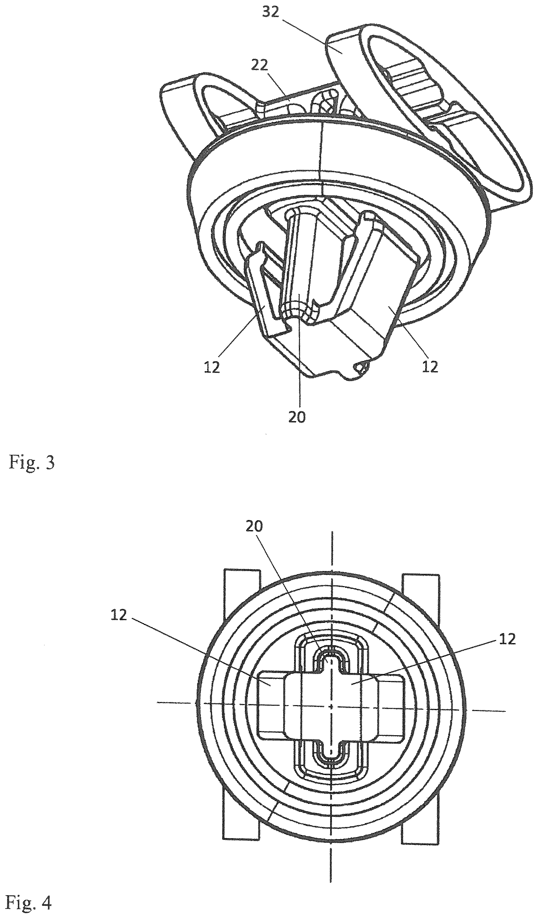

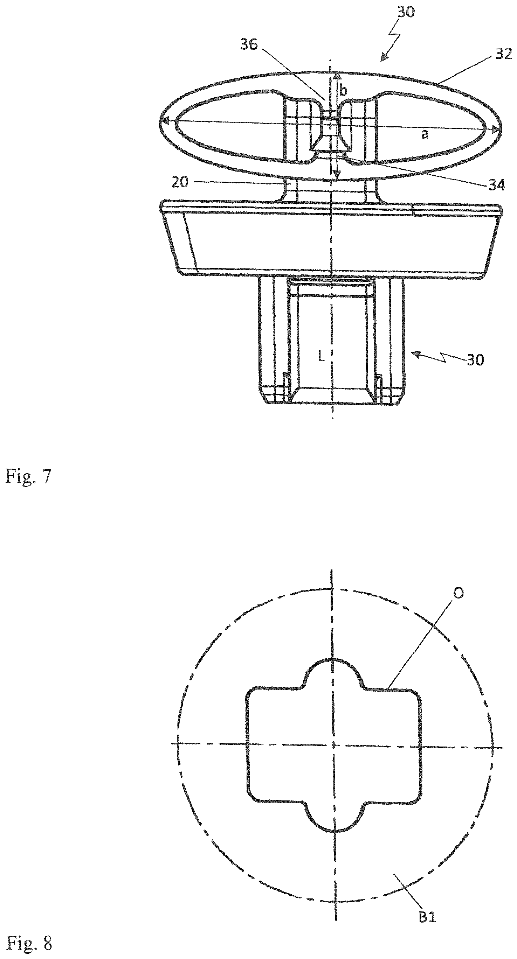

Wie man anhand der Fig. 2 und 3 erkennen kann, sind die Raststege 12 flächig ausgebildet. Daher werden sie bevorzugt mit einer eckigen Öffnung O (siehe Fig. 8) kombiniert, um den Befestigungsclip 1 innerhalb der Bauteilöffnung O gegen Drehung zu fixieren. Entsprechend stellt die Öffnung O bevorzugt ein Schlüsselloch dar, das nur durch daran angepasste Verraststrukturen nutzbar ist. Ein derartiges Schlüsselloch hat den Vorteil, dass der Befestigungsclip 1 in seiner Position und winkligen Ausrichtung festgelegt ist. Auf diese Weise wird bevorzugt die Verbindung mit dem zweiten Bauteil B2 über das zweite Befestigungsende 30 vorbereitet.

Für eine weitere bevorzugte Positionsstabilität des Befestigungsclips 1 in der Bauteilöffnung O sorgt ein axialer Stützsteg 19. Dieser stütz sich nach erfolgreichem Einsetzen des Befestigungsclips 1 in der Bauteilöffnung O an der Innenseite der Bauteilöffnung O ab. Dies stabilisiert ebenfalls die Position des Befestigungsclips 1 in der X-Y-Ebene bezogen auf das erste Bauteil B1.

Es ist ebenfalls bevorzugt, die Bauteilöffnung O rund, oval, elliptisch, polygonal oder unregelmäßig eckig auszubilden. Ein Verdrehen des Befestigungsclips 1 innerhalb der Ebene des ersten Bauteils B1 würde nur durch eine rotationssymmetrische Form der Bauteilöffnung O zugelassen werden. Dies ist in gleicher Weise bevorzugt wie eine nicht-rotationssymmetrische Form, die eine Position des Befestigungsclips 1 im ersten Bauteil B1 fixiert.

Die zwischengeordnete Stützstruktur 50 ist bevorzugt tellerartig ausgebildet. Sie gewährleistet aufgrund ihrer Anordnung und Stabilität eine ausreichende Gegenkraft, um das erste Bauteil B1 kraftschlüssig zwischen der Verraststruktur 10 und der Stützstruktur 50 zu halten.

Des Weiteren ist an der Stützstruktur 50 vorzugsweise eine Dichtstruktur 52 befestigt. Die Dichtstruktur 52 ist gemäß einer Ausführungsform (siehe unten) ein separates Spritzgussteil, dessen Material eine größere Elastizität als der übrige Befestigungsclip 1 aufweist. Diese Dichtstruktur 52 wird gemäß einer bevorzugten Ausführungsform vorliegender Erfindung in einem gesonderten Spritzgussverfahren hergestellt und dann an der Stützstruktur 50 befestigt. Die Art der Befestigung kann verschieden sein. Es muss lediglich sichergestellt sein, dass die Dichtstruktur verlässlich durch die Stützstruktur 50 gehalten ist. Entsprechend wird die Dichtstruktur 52 bevorzugt durch Kleben, Einrasten oder Klemmen an der Stützstruktur 50 gehalten.

Gemäß einer anderen bevorzugten Ausführungsform vorliegender Erfindung wird der Befestigungsclip 1 mithilfe eines bekannten 2K-Spritzgussverfahrens hergestellt. Dazu wird zunächst mit einem ersten Kunststoffschuss der breit schraffierte Teil A des Befestigungsclips 1 (siehe Fig. 5) in einer Spritzgussform ausgebildet. Mit einem zweiten Kunststoffschuss, der einen Kunststoff höherer Elastizität als der Kunststoff des ersten Kunststoffschusses in die Spritzgussform einbringt, wird bevorzugt in derselben Spritzgussform die Dichtstruktur 52 erzeugt. Dies ist der eng schraffierte Bereich B in Fig. 5. Nachfolgend wird der Befestigungsclip 1 mit Dichtstruktur 52 aus der Spritzgussform ausgeformt.

In Richtung der Verraststruktur 10 weist die Dichtstruktur 52 bevorzugt axial vorstehende, umlaufend angeordnete Dichtlippen 54 auf. Diese sind in Richtung der Stützstruktur 50 komprimierbar. Dadurch wird die Bauteilöffnung O, die bevorzugt von der Dichtstruktur 52 im befestigten Zustand umgeben wird, durch die komprimierte Dichtstruktur 52 abgedichtet. Zudem gewährleistet die komprimierbare Dichtstruktur 52, dass erste Bauteile B1 mit einer gewissen Dickentoleranz zwischen den Raststegen 12 und der Stützstruktur 50 verlässlich gehalten werden.

Das zweite Befestigungsende 30 ist gegenüberliegend zum ersten Befestigungsende 10 angeordnet. Es besteht aus mindestens einer in sich geschlossenen Federschleife 32. Die Federschleife 32 ist in radialer Richtung elastisch komprimierbar und kehrt bei Entlastung wieder in ihre Ausgangskonfiguration zurück. Die Verformbarkeit und die elastischen Federeigenschaften basieren auf der Form einer geschlossenen Schleife und den Materialeigenschaften des verwendeten Kunststoffs. Daher ist es bevorzugt, die Federschleife 32 in ihrer entlasteten Konfiguration elliptisch oder rund oder oval oder polygonal auszubilden. Die durch die Federschleife 32 eingeschlossene Fläche zu parallel oder winklig zur Längsachse L des Befestigungsclips 1 angeordnet. Gemäß einer bevorzugten Ausführungsform ist die Fläche parallel zur Längsachse vorgesehen. Gemäß einer anderen bevorzugten Ausführungsform schließt die eingeschlossene Fläche der Federschleife 32 mit der Längsachse L einen spitzen Winkel ein, der zur Stützstruktur 50 hin offen ist.

Vorzugsweise ist die mindestens eine Federschleife 32 elliptisch geformt und mit ihrer langen Hauptachse a quer zur Längsachse L des Axialstegs 20 angeordnet. Ebenfalls bevorzugt ist die Federschleife an einem der Stützstruktur 50 abgewandten Ende der kürzeren Nebenachse b über den Quersteg 22 mit dem Axialsteg 20 verbunden. Gemäß den oben beschriebenen bevorzugten Ausführungsformen ist die Nebenachse b parallel oder spitzwinklig zur Längsachse L des Befestigungsclips 1 angeordnet. Mithilfe der Einstellung der Dicke der Federschleife 32 in radialer Richtung, also der Dicke des Materialstreifens, der die Federschleife bildet, sowie der Breite der Federschleife quer zu ihrer Dicke sowie mit der Länge der Haupt- a und Nebenachse b lassen sich die Federeigenschaften der Federschleife 32 parallel zur Längsachse L gezielt einstellen. Diese konstruktiven Eigenschaften werden bevorzugt ergänzt durch die Wahl des Kunststoffs, aus dem der integrale Befestigungsclip 1 besteht.

Im Hinblick auf die Werkstoffauswahl des Befestigungsclips 1 sind die folgenden Kunststoffe bevorzugt. Diese werden gemäß unterschiedlicher bevorzugter Ausführungsformen vorliegender Erfindung mit einem Glasfaseranteil von bis zu 30 % verwendet. Folgende stabile Kunststoffe werden vorzugsweise für die Herstellung des Befestigungsclips 1 eingesetzt: PA-Kunststoffe (Polyamide), Polyoxymethylen (POM)-Kunststoffe, Acrylnitril-Butadien-Styrol-Copolymere (ABS), Polycarbonat (PC)-Kunststoffe, Polyetherimide (PEI)-Kunststoffe und Polypropylen (PP)-Kunststoffe. Im Hinblick auf diese Kunststoffe ist zu beachten, dass diese nicht über ihre Elastizitätsgrenze hinaus verformt werden dürfen. Eine derartige Verformung würde zur Ermüdung oder sogar zum Versagen des entsprechenden Kunststoffteils, hier die Federschleife 30 oder Rastarme 12, führen.

Um den Federweg parallel zur Nebenachse b unter Berücksichtigung der Elastizitätsgrenze des verwendeten Kunststoffs zu begrenzen, ist mindestens ein Begrenzungssteg 34 innerhalb der Federschleife 32 vorgesehen. Dieser Begrenzungssteg 34 ist einteilig vorgesehen oder wird durch zwei einander gegenüberliegend angeordnete Begrenzungsstege 34, 36 gebildet. Die Begrenzungsstege 34, 36 erstrecken sich gemäß unterschiedlicher bevorzugter Ausführungsformen vorliegender Erfindung parallel oder spitzwinklig zur Längsachse L. Sobald das zweite Bauteil B2 zwischen der Stützstruktur 50 und der Federschleife 32 gehalten wird, wird die Federschleife 32 vorzugsweise parallel zur Nebenachse b komprimiert, wenn die Nebenachse b parallel zur Längsachse L angeordnet ist. Mithilfe der Begrenzungsstege 34, 36 wird ein Ermüden des Materials der Federschleife 32 verhindert oder zumindest reduziert.

Es ist ebenfalls bevorzugt, zwei oder vier Federschleifen 32 am Befestigungsclip 1 anzuordnen. Bei vier Federschleifen 32 würde man einen weiteren Quersteg vorsehen (nicht gezeigt), der quer zum Quersteg 22 angeordnet wäre.

Zur Herstellung einer Verbindung zwischen zwei Bauteilen B1, B2 wird zunächst der Befestigungsclip 1 in der Bauteilöffnung O des ersten Bauteils B1 mithilfe der Rastarme 12 verrastet. Das Bauteil B1 ist vorzugsweise eine Karosseriestruktur im Kraftfahrzeug, eine Trägerstruktur oder Ähnliches. Danach wird das zweite Bauteil B2 mithilfe einer Aussparung oder einem einseitig offenen Langloch A zwischen der Stützstruktur 50 und den Federschleifen 32 befestigt. Vorzugsweise ist in der Verbindung der Axialsteg 20 in der Aussparung A angeordnet. In Abhängigkeit von der Dicke des zweiten Bauteils B2 werden die Federschleifen 32 komprimiert.

Vorzugsweise ist das zweite Bauteil B2 eine Klaue in Verbindung mit einem Verkleidungsteil oder Ähnlichem im Kraftfahrzeug. Somit dient die Klaue der Befestigung des Verkleidungsteils an dem Befestigungsclip 1 mithilfe dieser Klaue. Aber auch andere Anwendungen sind denkbar, in denen Bauteile unterschiedlicher Dicke aneinander befestigt werden.

Wie bereits oben erwähnt worden ist, wird der integrale Befestigungsclip 1 mittels Spritzgussverfahren hergestellt. Dazu wird zunächst im Schritt S1 eine passend geformte Spritzgussform bereitgestellt. Diese ist komplementär zum oben beschriebenen Befestigungsclip 1 ausgebildet. Im Schritt S2 wird der Befestigungsclip 1 aus einem stabilen Kunststoff (siehe oben) spritzgegossen. Gemäß einer Herstellungsroute wird im Schritt S3 in einer separaten Spritzgussform die Dichtstruktur 52 spritzgegossen und im Schritt S5 an der Stützstruktur 50 des Befestigungsclips 1 befestigt. Alternativ dazu wird im Schritt S3' die Dichtstruktur 52 im 2K-Spritzgussverfahren an die Stützstruktur 50 angespritzt. Im Schritt S4 wird der hergestellte Befestigungsclip 1 aus der Spritzgussform ausgeformt.

In einem alternativen Herstellungsverfahren wird der Befestigungsclip mit Hilfe eines additiven Verfahrens hergestellt. Dazu wird zunächst der Befestigungsclip 1 als einteilige Struktur in einem computergestützten Datenmodell definiert. Nachfolgend wird das computergestützte Datenmodell in einem additiven Verfahren in den Befestigungsclip 1 aus nur einem Kunststoff umgesetzt. Zunächst wird bevorzugt eine dünne Pulverschicht des zur Herstellung bestimmten Kunststoffs auf eine Bauplattform aufgetragen. Ein Laserstrahl schmilzt das Pulver exakt an den Stellen auf, die das computergestützte Konstruktion- oder Datenmodell vorgibt. Danach senkt sich die Fertigungsplattform ab und es erfolgt ein weiterer Pulverauftrag auf die bereits erzeugte Kunststoffschicht des Befestigungsclips 1. Das Kunststoffpulver wird erneut aufgeschmolzen und verbindet sich an den definierten Stellen mit der darunterliegenden Schicht. Der Befestigungsclip 1 kann je nach Ausgangsstoff und Anwendung mit Stereolithografie, Laser-Sintern oder 3D-Druckern hergestellt werden. Nach der Herstellung des Befestigungsclips 1 wird die separat hergestellte Dichtstruktur 52 an der Stützstruktur 50 befestigt.

### Bezugszeichenliste

- 1: Befestigungsclip
- 10: erste Befestigungsende
- 12: Raststeg
- 14: Einführschräge
- 16: Rastkante
- 18: Druckkante
- 19: Stützsteg
- 20: Axialsteg
- 22: Quersteg
- 30: zweite Befestigungsende
- 32: Federschleife
- 34,36: Begrenzungssteg
- 50: Stützstruktur
- 52: Dichtstruktur
- B1, B2: Bauteile
- O: Bauteilöffnung
- L: Längsachse
- a: Hauptachse
- b: Nebenachse
- A: Aussparung

## Patentansprüche

1. Befestigungsclip (1) zum Befestigen von einem ersten Bauteil (B1) an einem zweiten Bauteil (B2), der aus einer integralen länglichen Struktur mit einem ersten (10) und einem zweiten Befestigungsende (30) besteht, in der das erste Befestigungsende (10) eine zumindest einarmige selbsttätige Verraststruktur und das zweite Befestigungsende (30) eine federnde Klemmhalterung bildet, die jeweils gegen eine zwischengeordnete Stützstruktur (50) wirken, **dadurch gekennzeichnet, dass**
das zweite Befestigungsende (30) einen Quersteg (22) umfasst, an dem als federnde Klemmhalterung zumindest zwei Federschleifen (32) einander gegenüberliegend angeordnet sind.

2. Befestigungsclip (1) gemäß Patentanspruch 1, in welchem die Klemmhalterung zumindest eine in sich geschlossene Federschleife (32) umfasst, die eine Fläche vorzugsweise parallel zu einer Längsachse (L) des Befestigungsclips (1) einschließt.

3. Befestigungsclip (1) gemäß Patentanspruch 2, der im Inneren der mindestens einen Federschleife (32) einen Begrenzungssteg (34, 36) aufweist, der bevorzugt parallel zur Längsachse (L) verläuft und mit dem eine Kompression der Federschleife (32) auf ein Maximum begrenzt ist.

4. Befestigungsclip (1) gemäß einem der vorhergehenden Patentansprüche, dessen Stützstruktur (50) tellerartig ausgebildet ist und zumindest axial einseitig eine Dichtstruktur (52) aufweist.

5. Befestigungsclip (1) gemäß einem der vorhergehenden Ansprüche, dessen Verraststruktur (10) zumindest einen spitzwinklig zur Längsachse (L) des Befestigungsclips (1) angeordneten Raststeg (12) aufweist, der eine Einfuhrschräge (14) und an einem freien Ende einen Hinterschnitt in Bezug auf eine Löserichtung der Verraststruktur umfasst.

6. Befestigungsclip (1) gemäß Patentanspruch 5 in Kombination mit Patentanspruch 4, mit dessen Verraststruktur ein Bauteil (B1) gegen die Dichtstruktur (52) verrastbar ist.

7. Ein erstes und ein zweites Bauteil, die über den Befestigungsclip (1) gemäß einem der Patentansprüche 1 bis 6 miteinander verbunden sind.

8. Herstellungsverfahren für einen Befestigungsclip (1), das die folgenden Schritte aufweist:
a. Bereitstellen (S1) einer Spritzgussform, die eine einteilige Struktur für den Befestigungsclip (1) vorgibt, wobei der Befestigungsclip (1) aus einer integralen länglichen Struktur mit einem ersten (10) und einem zweiten Befestigungsende (30) besteht, in der das erste Befestigungsende eine zumindest einarmige selbsttätige Verraststruktur und das zweite Befestigungsende eine federnde Klemmhalterung bildet, die jeweils gegen eine zwischengeordnete Stützstruktur (50) wirken, wobei das zweite Befestigungsende (30) einen Quersteg (22) mit zumindest zwei einander gegenüberliegend angeordneten Federschleifen (32) als federnde Klemmhalterungen umfasst, und
b. Spritzgießen (S2) des Befestigungsclips (1) aus nur einem Kunststoff.

9. Herstellungsverfahren gemäß Patentanspruch 8, mit dem weiteren Schritt:
Befestigen (S5) einer Dichtstruktur (52) an der Stützstruktur (50) oder
Spritzgießen (S3') der Dichtstruktur (52) im 2K-Spritzgussverfahren, sodass die Dichtstruktur (52) an der Stützstruktur (50) befestigt ist.

10. Herstellungsverfahren für einen Befestigungsclip (1), das die folgenden Schritte aufweist:
a. Bereitstellen eines Datenmodells, das eine einteilige Struktur für den Befestigungsclip (1) vorgibt, wobei der Befestigungsclip (1) aus einer integralen länglichen Struktur mit einem ersten (10) und einem zweiten Befestigungsende (30) besteht, in der das erste Befestigungsende eine zumindest einarmige selbsttätige Verraststruktur und das zweite Befestigungsende eine federnde Klemmhalterung bildet, die jeweils gegen eine zwischengeordnete Stützstruktur (50) wirken, wobei das zweite Befestigungsende (30) einen Quersteg (22) mit zumindest zwei einander gegenüberliegend angeordneten Federschleifen (32) als federnde Klemmhalterungen umfasst, und
b. Erzeugen des Befestigungsclips (1) auf Grundlage des Datenmodells aus nur einem Kunststoff mit einem additiven Verfahren, insbesondere 3D Druck.

11. Verbindungsverfahren zum Befestigen von einem ersten Bauteil (B1) an einem zweiten Bauteil (B2) mit einem Befestigungsclip (1), der aus einer integralen länglichen Struktur mit einem ersten (10) und einem zweiten Befestigungsende (30) besteht, in der das erste Befestigungsende (10) eine zumindest einarmige selbsttätige Verraststruktur und das zweite Befestigungsende (30) eine federnde Klemmhalterung bildet, die jeweils gegen eine zwischengeordnete Stützstruktur (50) wirken, in welchem das zweite Befestigungsende (30) einen Quersteg (22) mit zumindest zwei einander gegenüberliegend angeordneten Federschleifen (32) als federnde Klemmhalterungen umfasst, wobei das Verbindungsverfahren die folgenden Schritte aufweist:
a. Verrasten des Befestigungsclips (1) in einer Bauteilöffnung (O) des ersten Bauteils (B1) mithilfe eines Rastarms (12) der Verraststruktur und
b. Befestigen des zweite Bauteil (B2) mithilfe einer Aussparung (A) oder einem einseitig offenen Langloch (A) zwischen der Stützstruktur (50) und der Federschleife (32) der federnden Klemmhalterung.

12. Verbindungsverfahren gemäß Patentanspruch 11, mit dem weiteren Schritt:
Anordnen des Axialstegs (20) in der Verbindung in der Aussparung (A).

13. Verbindungsverfahren gemäß Patentanspruch 11 oder 12, mit dem weiteren Schritt:
Komprimieren der Federschleifen (32) in Abhängigkeit von einer Dicke des zweiten Bauteils (B2).

## Claims

1. A fastening clip (1) for fastening a first component (B1) to a second component (B2) that consists of an integral, elongated structure with a first (10) and a second fastening end (30) in which the first fastening end (10) forms an at least one-armed independent latching structure, and the second fastening end (30) forms a resilient clamp that each act on an intermediate support structure (50), **characterized in that**
the second fastening end (2) comprises a cross bar (22) on which, as resilient clamps, at least two spring loops (32) are arranged opposite each other.

2. The fastening clip (1) according to claim 1 in which the clamp comprises at least one closed spring loop (32) that encloses an area preferably parallel to a longitudinal axis (L) of the fastening clip (1).

3. The fastening clip (1) according to claim 2 that, in the interior of the at least one spring loop (32), has a limiting bar (34, 36) that preferably runs parallel to the longitudinal axis (L), and with which a compression of the spring loop (32) is limited to a maximum.

4. The fastening clip (1) according to one of the preceding claims with a support structure (50) that is designed plate-like and has a sealing structure (52), at least axially on one side.

5. The fastening clip (1) according to one of the preceding claims with a latching structure (10) that has at least one latching bar (12) arranged at an acute angle relative to the longitudinal axis (L) of the fastening clip (1) and comprises an insertion chamfer (14) and an undercut on a free end relative to a releasing direction of the latching structure.

6. The fastening clip (1) according to claim 5 in combination with claim 4 with a latching structure that is capable of latching a component (B1) against the sealing structure (52).

7. A first and a second component that are connected by the fastening clip (1) according to one of claims 1 through 6.

8. A production method for a fastening clip (1), having the following steps:
a. providing (S1) an injection mold that defines a single-part structure for the fastening clip (1), wherein the fastening clip (1) consists of an integral, elongated structure with a first (10) and a second fastening end (30) in which the first fastening end forms an at least one-armed independent latching structure, and the second fastening end forms a resilient clamp that each act on an intermediate support structure (50), wherein the second fastening end (30) comprises a cross bar (22) with at least two spring loops (32), arranged opposite each other, as resilient clamps, and
b. injection molding (S2) the fastening clip (1) from only one plastic.

9. The production method according to claim 8, with the further step:
fastening (S5) a sealing structure (52) to the support structure (50), or
injection molding (S3') the sealing structure (52) in the two-component injection molding method so that the sealing structure (52) is fastened to the support structure (50).

10. A production method for a fastening clip (1), having the following steps:
a. providing a data model that defines a single-part structure for the fastening clip (1), wherein the fastening clip (1) consists of an integral, elongated structure with a first (10) and a second fastening end (30) in which the first fastening end forms an at least one-armed independent latching structure, and the second fastening end forms a resilient clamp that each act on an intermediate support structure (50), wherein the second fastening end (30) comprises a cross bar (22) with at least two spring loops (32), arranged opposite each other, as resilient clamps, and
b. generating the fastening clip (1) based on the data model from only one plastic by an additive method, in particular 3-D printing.

11. A connecting method for fastening a first component (B1) to a second component (B2) with a fastening clip (1) that consists of an integral, elongated structure with a first (10) and a second fastening end (30) in which the first fastening end (10) forms an at least one-armed independent latching structure, and the second fastening end (30) forms a resilient clamp that each act on an intermediate support structure (50), in which the second fastening end (30) comprises a cross bar (22) with at least two spring loops (32), arranged opposite each other, as resilient clamps, wherein the connecting method has the following steps:
a. latching the fastening clip (1) in a component opening (O) of the first component (B1) with the assistance of a latching arm (12) of the latching structure, and
b. fastening the second component (B2) with the assistance of a cutout (A) or a slot (A) open on one side between the support structure (50) and the spring loop (32) of the resilient clamp.

12. The connecting method according to claim 11, with the further step:
arranging the axial bar (20) in the connection in the cutout (A).

13. The connecting method according to claim 11 or 12, with the further step:
compressing the spring loop (32) depending on a thickness of the second component (B2).

## Revendications

1. Clip de fixation (1) pour la fixation d'un premier composant (B1) à un deuxième composant (B2) consistant en une structure allongée intégrale avec une première (10) et une deuxième extrémité de fixation (30), dans laquelle la première extrémité de fixation (10) forme une structure d'encliquetage automatique à au moins un bras et la deuxième extrémité de fixation (30) forme un support de serrage élastique, lesquels agissent respectivement contre une structure d'appui (50) intermédiaire, **caractérisé en ce que**
- la deuxième extrémité de fixation (30) comporte une barre transversale (22) sur laquelle sont disposées au moins deux boucles de ressort (32) opposées en tant que support de serrage élastique.

2. Clip de fixation (1) selon la revendication 1, dans lequel le support de serrage comporte au moins une boucle de ressort (32) fermée sur elle-même, laquelle inclut une surface de préférence parallèle à un axe longitudinal (L) du clip de fixation (1).

3. Clip de fixation (1) selon la revendication 2, lequel présente une barrette de limitation (34, 36) à l'intérieur de l'au moins une boucle de ressort (32), laquelle s'étend de préférence parallèlement à l'axe longitudinal (L) et permet de limiter une compression de la boucle de ressort (32) à un maximum.

4. Clip de fixation (1) selon l'une des revendications précédentes, dont la structure d'appui (50) est conçue en forme d'assiette et présente une structure d'étanchéité (52) au moins sur un côté axial.

5. Clip de fixation (1) selon l'une des revendications précédentes, dont la structure d'encliquetage (10) présente au moins une barrette d'encliquetage (12) disposée en angle aigu par rapport à l'axe longitudinal (L) du clip de fixation (1), laquelle comporte un chanfrein d'introduction (14) et une contre-dépouille à une extrémité libre par rapport à une direction de détachement de la structure d'encliquetage.

6. Clip de fixation (1) selon la revendication 5 en combinaison avec la revendication 4, dont la structure d'encliquetage permet d'encliqueter un composant (B1) contre la structure d'étanchéité (52).

7. Premier et deuxième composants, lesquels sont reliés l'un à l'autre à l'aide du clip de fixation (1) selon l'une des revendications 1 à 6.

8. Procédé de fabrication pour un clip de fixation (1), présentant les étapes suivantes :
a. mise à disposition (S1) d'un moule d'injection définissant une structure monobloc pour le clip de fixation (1), le clip de fixation (1) consistant en une structure allongée intégrale avec une première (10) et une deuxième extrémité de fixation (30), dans laquelle la première extrémité de fixation forme une structure d'encliquetage automatique à au moins un bras et la deuxième extrémité de fixation forme un support de serrage élastique, lesquels agissent respectivement contre une structure d'appui (50) intermédiaire, la deuxième extrémité de fixation (30) comportant une barre transversale (22) sur laquelle sont disposées au moins deux boucles de ressort (32) opposées en tant que supports de serrage élastiques.

9. Procédé de fabrication selon la revendication 8, comprenant l'étape supplémentaire suivante :
- fixation (S5) d'une structure d'étanchéité (52) à la structure d'appui (50) ou
- moulage par injection (S3') de la structure d'étanchéité (52) à l'aide d'un procédé de moulage par injection 2K, de manière à fixer la structure d'étanchéité (52) à la structure d'appui (50).

10. Procédé de fabrication pour un clip de fixation (1), présentant les étapes suivantes :
a. mise à disposition d'un modèle de données définissant une structure monobloc pour le clip de fixation (1), le clip de fixation (1) consistant en une structure allongée intégrale avec une première (10) et une deuxième extrémité de fixation (30), dans laquelle la première extrémité de fixation forme une structure d'encliquetage automatique à au moins un bras et la deuxième extrémité de fixation forme un support de serrage élastique, lesquels agissent respectivement contre une structure d'appui (50) intermédiaire, la deuxième extrémité de fixation (30) comportant une barre transversale (22) sur laquelle sont disposées au moins deux boucles de ressort (32) opposées en tant que supports de serrage élastiques, et
b. production du clip de fixation (1) sur la base du modèle de données à partir d'une seule matière plastique à l'aide d'un procédé additif, en particulier une impression 3D.

11. Procédé d'assemblage pour la fixation d'un premier composant (B1) à un deuxième composant (B2) à l'aide d'un clip de fixation (1) consistant en une structure allongée intégrale avec une première (10) et une deuxième extrémité de fixation (30), dans laquelle la première extrémité de fixation (10) forme une structure d'encliquetage automatique à au moins un bras et la deuxième extrémité de fixation (30) forme un support de serrage élastique, lesquels agissent respectivement contre une structure d'appui (50) intermédiaire, la deuxième extrémité de fixation (30) comportant une barre transversale (22) sur laquelle sont disposées au moins deux boucles de ressort (32) opposées en tant que supports de serrage élastiques, le procédé d'assemblage présentant les étapes suivantes :
a. encliquetage du clip de fixation (1) dans une ouverture de composant (O) du premier composant (B1) à l'aide d'un bras d'encliquetage (12) de la structure d'encliquetage et
b. fixation du deuxième composant (B2) à l'aide d'un évidement (A) ou d'un trou oblong (A) ouvert unilatéralement entre la structure d'appui (50) et la boucle de ressort (32) du support de serrage élastique.

12. Procédé d'assemblage selon la revendication 11, comprenant l'étape supplémentaire suivante :
- disposition de la barrette axiale (20) dans l'assemblage dans l'évidement (A).

13. Procédé d'assemblage selon la revendication 11 ou 12, comprenant l'étape supplémentaire suivante :
- compression des boucles de ressort (32) en fonction d'une épaisseur du deuxième composant (B2).
